# EUROPÄISCHE PATENTSCHRIFT

(11) **EP 1 577 738 B1**
(45) Veröffentlichungstag und Bekanntmachung des Hinweises auf die Patenterteilung: **24.07.2013**
(21) Anmeldenummer: 05003930.4
(22) Anmeldetag: 23.02.2005
(51) Int. Cl.: G06F 1/32, G06F 1/16

(54) **Pocket PC mit verschiedenen Betriebszuständen**
Pocket PC with several operating states
Ordinateur personnel de poche avec plusiers états opérationnels

(30) Priorität: 16.03.2004 DE 102004012854
(43) Veröffentlichungstag der Anmeldung: 21.09.2005
(73) Patentinhaber: Fujitsu Technology Solutions Intellectual Property GmbH, 80807 München (DE)
(72) Erfinder: Höhnke, Thorsten, 86343 Königsbrunn (DE)
(74) Vertreter: Epping - Hermann - Fischer

(56) Entgegenhaltungen:
- EP-A2- 1 359 494
- US-A1- 2002 103 949
- US-A1- 2003 149 904
- US-A1- 2003 158 609
- US-A1- 2004 034 803
- SHIH E ET AL: "WAKE ON WIRELESS: AN EVENT DRIVEN ENERGY SAVING STRATEGY FOR BATTERY OPERATED DEVICES", PROCEEDINGS OF THE 8TH. ANNUAL INTERNATIONAL CONFERENCE ON MOBILE COMPUTING AND NETWORKING. MOBICOM 2002. ATLANTA, GA, SEPT. 23 - 28, 2002; [ANNUAL INTERNATIONAL CONFERENCE ON MOBILE COMPUTING AND NETWORKING], NEW YORK, NY : ACM, US, vol. CONF. 8, 23 September 2002 (2002-09-23), pages 160-171, XP001171465, DOI: 10.1145/570645.570666 ISBN: 978-1-58113-486-5

## Beschreibung

Die Erfindung betrifft einen tragbaren Computer, insbesondere Pocket PC, mit mindestens einer Einrichtung zur drahtlosen Datenübertragung nach dem Oberbegriff des Anspruchs 1. Die Erfindung weiterhin ein Verfahren zum Einstellen verschiedener Betriebszustände für einen tragbaren Computer gemäß dem Oberbegriff von Anspruch 13.

Als Pocket PC werden tragbare Computer bezeichnet, die bequem in einer Hand gehalten werden können. Sie werden alternativ auch als Handhelds oder Organizer bezeichnet. Mobiltelefone mit Funktionen, die über das Telefonieren und das Verschicken von SMS (Short Messenger Service) Meldungen hinausgehen und die häufig als Smartphones bezeichnet werden, gehören ebenfalls zu dieser Gruppe. Ihnen ist gemeinsam, dass sie deutlich kleiner als andere tragbare Computer wie zum Beispiel Laptops oder Notebooks sind. Anwendungsprogramme aus den Bereichen Adress- und Terminverwaltung, Textverarbeitung oder Datenpräsentation sind in Versionen mit leicht reduzierter Leistungsfähigkeit häufig auch für Pocket PCs verfügbar.

Viele Pocket PCs sind mit Einrichtungen zur drahtlosen Datenübertragung ausgestattet, die entweder fest eingebaut sind oder optional als Einsteckkarten für entsprechende Steckplätze erhältlich sind. Unter Datenübertragung ist ein gegebenenfalls auch bidirektionaler Austausch von Informationen zu verstehen. Zur Datenübertragung ist in diesem Zusammenhang neben der Übertragung von Daten oder Datenpaketen in einem Datennetzwerk auch die Übertragung von Sprache, Bildern und Nachrichten, z.B. SMS oder e-mail, in einem Kommunikationsnetzwerk zu zählen. Konkrete Beispiele in diesen Bereichen sind Einrichtungen zur Datenübertragung in lokalen Netzwerken, zum Beispiel WLAN (Wireless Local Area Network) oder BT (Blue Tooth), und in globalen Kommunikationsnetzwerken wie GSM (Global System of Mobile Communication), GPRS (Global Packaging Radio System) oder UMTS (Universal Mobile Telecommunication System) sowie Empfangseinrichtung für Funkdienste, wie zum Beispiel für GPS (Global Positioning System).

Aufgrund des größeren Funktionsumfangs, vor allem wegen der höheren Rechenleistung und des größeren Displays, haben Pocket PCs meist eine deutlich kürzere Betriebsdauer mit einer Batterieladung als z.B. reine Mobiltelefone. Insbesondere beim Betrieb von Einrichtungen zur drahtlosen Datenübertragung weitet sich dieses zum Problem aus, wenn für einen längeren Zeitraum Erreichbarkeit im Funknetz gewährleistet sein soll. Die Betriebssysteme handelsüblicher Pocket PCs stellen üblicherweise nur zwei Betriebszustände mit verschiedener Leistungsaufnahme und somit verschiedener Betriebsdauer im Batteriebetrieb zur Verfügung.

In einem ersten Betriebszustand sind im wesentlichen alle Komponenten des tragbaren Computers in einem Zustand mit voller Funktionalität. Einzige Ausnahme bei handelsüblichen Pocket PCs stellt hier das Display dar. Wenn vom Benutzer für längere Zeit keine Eingabe erfolgt, wird die Hintergrundbeleuchtung des Displays abgeschaltet, um Strom einzusparen. Aus dem gleichen Grund wird bei Batteriebetrieb das Display mit niedrigerem Kontrast betrieben als bei Netzbetrieb.

In einem zweiten Betriebszustand sind dann im wesentlichen alle Komponenten des tragbaren Computers in einem Ruhezustand mit eingeschränkter Funktionalität und erniedrigter Stromaufnahme. In diesem Zustand wird in der Regel lediglich die interne Uhr weiterbetrieben sowie überwacht, ob der Benutzer eine der Eingabetasten betätigt, wodurch dann wieder der erste Betriebszustand eingeschaltet wird. Zusätzlich kann ein weiterer Zustand vorhanden sein, in dem das gesamte Gerät, wieder mir Ausnahme einer internen Uhr, stromlos geschaltet ist und nur über einen Schalter eingeschaltet werden kann, und nicht über Tastendruck, wie im zweiten Betriebszustand.

Diese Betriebszustände sind für den dauerhaften Betrieb mit Einrichtungen zur drahtlosen Datenübertragung oder Kommunikation ungeeignet. Entweder ist der Stromverbrauch zu hoch und dadurch die Betriebsdauer im Batteriebetrieb zu kurz, oder die Erreichbarkeit im drahtlosen Funknetz ist nicht gewährleistet.

Die US 2004/0034803 A1 offenbart ein Verfahren und eine Vorrichtung für ein Computersystem mit einem aktiven Schlafzustand. Die Vorrichtung umfasst ein Computersystem mit einem normalen Betriebsmodus und einem aktiven Schlafmodus. Der aktive Schlafmodus verbraucht weniger Leistung als der normale Betriebsmodus. Das Computersystem weist des Weiteren ein Hochleistungssystem und ein Niedrigleistungssystem auf. Das Niedrigleistungssystem führt einen oder mehrere Aufgaben während des aktiven Schlafmodus aus.

Der Artikel "Wake on Wireless: An Event Driven Energy Saving Strategy for Battery Operated Devices" von E. Shih, P. Bahl und M. J. Sinclair, Proc. of the 8th Annual International Conference on Mobile Computing and Networking, ACM, 2003, offenbart eine ereignisgetriebene Energiesparstrategie für batteriebetriebene Geräte. Um die Leistungsaufnahme in einem Bereitschaftszustand zu reduzieren, wird das Gerät und seine drahtlose Netzwerkkarte heruntergefahren, wenn das Gerät nicht benutzt wird. Das Gerät wird nur dann mit einer Betriebsspannung versorgt, wenn ein eingehender Anruf empfangen wird. Hierzu wird ein Client beschrieben, der einen PDA mit einer IEEE 802.11b-Karte sowie einen sekundären Niedrigenergiefunküberträger umfasst.

Aufgabe der Erfindung ist, einen tragbaren Computer, insbesondere Pocket PC vorzustellen, bei dem trotz ständiger Erreichbarkeit über die Einrichtung zur drahtlosen Datenübertragung eine deutlich verlängerte Betriebsdauer im Batteriebetrieb gegeben ist.

Die Aufgabe wird erfindungsgemäß dadurch gelöst, dass ein dritter Betriebszustand vorgesehen ist, in dem wenigstens die mindestens eine Einrichtung zur drahtlosen Datenübertragung in dem Zustand voller Funktionalität ist, während weitere Komponenten des tragbaren Computers, die nicht der drahtlosen Datenübertragung dienen, in dem Ruhezustand mit eingeschränkter Funktionalität und erniedrigter Stromaufnahme sind oder aus sind. Ebenso wird die Aufgabe durch den kennzeichnenden Teil des in Anspruch 13 beschriebenen Verfahrens gelöst.

Der Erfindung liegt zugrunde, dass die Erreichbarkeit über die Einrichtung zur drahtlosen Datenübertragung auch dann sichergestellt werden kann, wenn die Funktionalität einiger anderer Komponenten des Computers eingeschränkt wird. Dadurch sinkt der Stromverbrauch des tragbaren Computers und die Betriebsdauer im Batteriebetrieb steigt. Zu diesem Zweck wird eine Steuereinrichtung beschrieben, das das Umschalten in den dritten Betriebszustand steuert und bei jedem Umschalten festlegt, welche Komponenten des tragbaren Computers in den Ruhezustand mit erniedrigtem Stromaufnahme gesetzt werden dürfen, ohne die Einrichtungen zur drahtlosen Datenübertragung in ihrer Funktion einzuschränken. Gleichzeitig wird sichergestellt, dass andere Benutzeranwendungen, die im dritten Betriebszustand weiterhin ausgeführt werden sollen, daran nicht gehindert werden.

Die Steuereinrichtung ist dabei vorteilhafterweise in der Lage, den tragbaren Computer bei Bedarf wieder in den ersten Betriebszustand zurückzuschalten, falls die mindestens eine Einrichtung zur drahtlosen Datenübertragung eingehende Daten signalisiert.

Weitere vorteilhafte Ausgestaltungen der Erfindung sind in den Unteransprüchen angegeben.

Im folgenden wird die Erfindung beispielhaft anhand einer Figur näher erläutert.

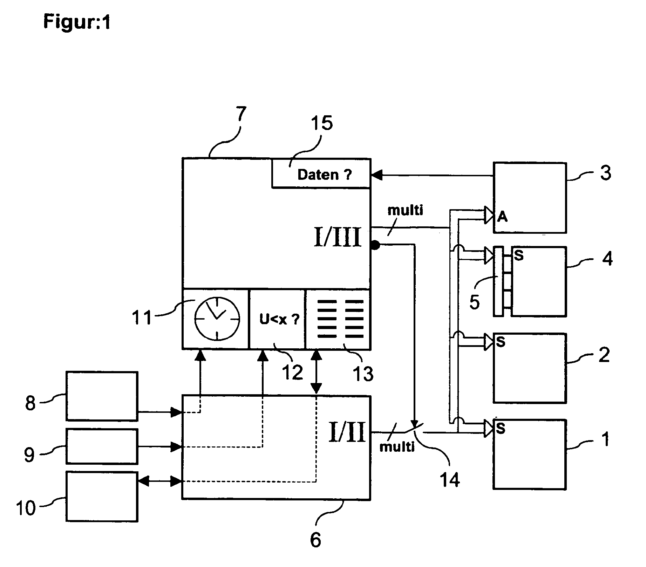

Die Figur zeigt eine schematische Repräsentation des tragbaren Computers mit einer Steuereinrichtung zum Einstellen verschiedener Betriebszustände.

Als Komponenten eines tragbaren Computers sind in der Figur beispielhaft eine Bildschirmeinheit 1, ein Prozessor 2, eine Einrichtung zur drahtlosen Datenübertragung 3 sowie eine Einsteckkarte 4, die in einen Steckplatz 5 eingesteckt ist, dargestellt. Diese Komponenten sind mit einem Betriebssystem 6 sowie einer Steuereinrichtung 7 verbunden. Das Betriebssystem 6 nimmt Informationen von Bedienelementen 8, einer Batterie 9, sowie einem oder mehrerer Anwendungsprogramme 10 auf und leitet sie an die Steuereinrichtung 7 weiter. Die Steuereinrichtung 7 weist einen Zeitmesser 11, eine Überwachungseinheit 12, sowie eine Tabelle mit Anwendungsprogrammen 13 auf. Weiterhin ist ein Mittel 14 vorhanden, mit dem ein Umschalten in den zweiten Betriebszustand II blockiert werden kann und ein Erkennungsmittel 15, das den Eingang von Daten an der mindestens einen Einrichtung 3 zur drahtlosen Datenübertragung signalisiert.

Die dargestellte Figur erhebt nicht den Anspruch, ein vollständiges Blockschaltbild für einen tragbaren Computer zu sein, sondern stellt lediglich die Komponenten dar, die erfindungsgemäß zum Einstellen verschiedener Betriebszustände für einen tragbaren Computer notwendig sind.

Die rechts in der Figur gezeigten Komponenten 1 bis 4 eines tragbaren Computers verfügen je über Steuermöglichkeiten, um von einem aktiven Zustand voller Funktionalität A in einen Ruhezustand S mit eingeschränkter Funktionalität und verringerter Stromaufnahme umzuschalten. Der Ruhezustand S kann für die verschiedenen Komponenten auf unterschiedliche Art und Weise ausgebildet sein. Für die Bildschirmeinheit 1 ist beispielsweise möglich, Strom durch das Ausschalten des Bildschirms oder der Hintergrundbeleuchtung einzusparen. Alternativ kann zusätzlich die Grafikeinheit, welche die Verarbeitung der Bildschirminhalte durchführt, abgeschaltet werden. Für den Prozessor 2 besteht die Möglichkeit, sowohl Arbeitsfrequenz wie Betriebsspannung abzusenken, wodurch der Prozessor zwar weniger leistungsfähig wird, aber auch der Stromverbrauch reduziert wird. Ebenfalls ist möglich, den Prozessor ganz anzuhalten und vorzusehen, dass durch ein sogenanntes Interruptsignal die Verarbeitung von Befehlen wieder aufgenommen wird. Andere Komponenten, wie beispielsweise die in den Steckplatz 4 eingesteckte Einsteckkarte zur Speichererweiterung, können im Ruhezustand komplett abgeschaltet werden, falls auf ihre Funktionalität verzichtet werden kann.

In der Ausgangssituation befinde sich der tragbare Computer in dem ersten Betriebszustand I. Der Zeitmesser 11 in der Steuereinrichtung 7 bestimmt die Länge der Zeitspanne, in der keines der Bedienelemente 8 betätigt wird. Die dafür notwendige Information wird vom Betriebssystem 6 bereitgestellt. Überschreitet diese Zeitspanne einen vorgegebenen, und unter Umständen durch den Bediener abänderbaren Zeitraum, weist die Steuereinrichtung 7 den dritten Betriebszustand III an.

Dieser dritte Betriebszustand III ist dadurch gekennzeichnet, dass verschiedene Komponenten des Computers in den Ruhezustand S mit verminderter Stromaufnahme geschaltet werden. Welche Komponenten in den Zustand S versetzt werden, wird bei jedem Umschalten vom ersten in den dritten Betriebszustand III von der Steuereinrichtung 7 nach vorgegebenen Kriterien ermittelt. Es ist sicherzustellen, dass Einrichtungen zur drahtlosen Datenübertragung, die zum Zeitpunkt des Umschaltens eine aktive Funkverbindung haben, also beispielsweise in einem Funknetz angemeldet sind, weiterhin im Zustand A verbleiben. Darüber hinaus ermittelt die Steuereinrichtung 7 über das Betriebssystem 6 Informationen darüber, welche Anwendungsprogramme 10 zur Zeit des Umschaltens auf dem tragbaren Computer ausgeführt werden. Der Name dieser Anwendungsprogramme 10 wird mit den Einträgen in der Tabelle 13 verglichen. In der Tabelle 13 sind solche Anwendungsprogramme 10 gelistet, die beim Umschalten in den dritten Betriebszustand III weiterhin ausgeführt werden sollen. Wenn sich der Name des Anwendungsprogramms 10 nicht in der Tabelle 13 befindet, weist die Steuereinrichtung 7 das Betriebssystem 6 an, das Anwendungsprogramm 10 zu stoppen, da jedes im dritten Betriebszustand III ausgeführte Anwendungsprogramm 10 durch Speicherzugriffe und Prozessornutzung zu einem erhöhten Strombedarf führt. Für den Fall, dass der Name des Anwenderprogramms 10 in der Tabelle 13 gelistet ist, wird es nicht gestoppt. In der Tabelle 13 ist ebenfalls aufgeführt, welche der Komponenten des tragbaren Computers zur Ausführung des Anwendungsprogramms 10 zwingend benötigt werden. Diese Komponenten des tragbaren Computers werden beim Umschalten in den dritten Betriebszustand III nicht in den Ruhezustand S versetzt. Ein solches Anwendungsprogramm 10 könnte beispielsweise ein Wiedergabeprogramm für Musikdateien sein. Damit die Musikwiedergabe beim Umschalten in den dritten Betriebszustand III nicht unterbrochen wird, darf beispielsweise eine Audioausgabeeinheit nicht in den Ruhezustand S versetzt werden, wohingegen der Prozessor 2 durchaus in den Ruhezustand S versetzt werden kann, da nicht seine volle Funktionalität benötigt wird.

Während des dritten Betriebszustandes III überwacht die Steuereinrichtung 7 mit Hilfe des Erkennungsmittels 15, ob eine der Einrichtungen 3 zur drahtlosen Datenübertragung eingehende Daten signalisiert. Eingehende Daten sind dabei ebenso Daten in einem Datennetzwerk wie Anrufe oder SMS (Short Messenger Service) in einem Kommunikationsnetzwerk. Die Steuereinrichtung 7 schaltet dann in den ersten Betriebszustand I zurück, wodurch sichergestellt wird, dass die eingehenden Daten adäquat verarbeitet werden können.

Im ersten und im dritten Betriebszustand III verhindert die Steuereinrichtung 7 über das Mittel 14 ein eventuell vom Betriebssystem 6 angewiesenes Umschalten in den zweiten Betriebszustand II. Dadurch wird verhindert, dass durch das Betriebssystem ein Betriebszustand angewiesen wird, in dem die Erreichbarkeit in Funknetzen nicht gewährleistet ist.

Falls die Spannung der üblicherweise wiederaufladbaren Batterie 9 jedoch unter einen kritischen Wert sinkt, kann das Funktionieren der Einrichtung 3 zur drahtlosen Datenübertragung prinzipiell nicht mehr aufrecht gehalten werden. Es ist in diesem Fall wichtiger, dass die verbleibende Ladung der Batterie 9 genutzt wird, um den tragbaren Computer kontrolliert in den zweiten Betriebszustand II mit der geringsten Stromaufnahme zu bringen.

Das Umschalten in den zweiten Betriebszustand II ist ein komplexer Vorgang, da hierbei im wesentlichen alle Komponenten des tragbaren Computers in den Ruhezustand S versetzt werden und es sichergestellt werden muss, dass der Dateninhalt von flüchtigen Speichermedien erhalten bleibt. Zu diesem Zweck kontrolliert die Überwachungseinrichtung 12 die Spannung der Batterie 9. Fällt die Spannung unter einen vorgegebenen Wert, deaktiviert die Steuereinrichtung 7 das Mittel 14 zur Unterbindung des zweiten Betriebszustandes II und ermöglicht dem Betriebssystem 6 somit, das Umschalten in den zweiten Betriebszustand II durchzuführen. Das Zurückgeben der vollen Kontrolle über die Komponenten des Computers an das Betriebssystem 6 entbindet die Steuereinrichtung 7 von vorteilhafterweise davon, aufwendige Mittel zur Datensicherheit selbst bereitzustellen.

In einer weiteren Ausführungsform kann zusätzlich über die Bedienelemente 8 ein Umschalten zwischen den Betriebszuständen I bis III manuell vom Benutzer angewiesen werden.

Die Besonderheit des erfindungsgemäßen Verfahrens zum Einstellen verschiedener Betriebszustände liegt darin, dass ein Betriebszustand definiert wird, bei dem nur bestimmte Komponenten des tragbaren Computers in den Ruhezustand S mit eingeschränkter Funktionalität und erniedrigter Stromaufnahme gesetzt werden. Dabei ist diese Zuordnung dynamisch in der Weise, dass bei jedem Umschalten in diesen Betriebszustand anhand vorgegebener Kriterien neu ermittelt wird, welche Komponenten in den Ruhezustand S versetzt werden dürfen. Dieses Verfahren ist vorteilhaft bei tragbaren Computern die Einrichtungen zur drahtlosen Datenübertragung aufweisen anzuwenden, aber nicht auf diese beschränkt.

### Bezugszeichenliste

- 1: Bildschirmeinheit
- 2: Prozessor
- 3: Einrichtung zur drahtlosen Datenübertragung
- 4: Einsteckkarte
- 5: Steckplatz
- 6: Betriebssystem
- 7: Steuereinrichtung zum Einstellen verschiedener Betriebszustände
- 8: Bedienelemente
- 9: Batterie
- 10: Anwendungsprogramm
- 11: Zeitmesser
- 12: Überwachungseinrichtung
- 13: Tabelle von Anwendungsprogrammen
- 14: Mittel zum Unterbinden des zweiten Betriebszustands II
- 15: Erkennungsmittel für den Eingang von Daten
- I: Erster Betriebszustand
- II: Zweiter Betriebszustand
- III: Dritter Betriebszustand
- A: Zustand mit voller Funktionalität
- S: Ruhezustand mit eingeschränkter Funktionalität

## Patentansprüche

1. Tragbarer Computer mit einem Prozessor (2) und wenigstens einer Einrichtung (3) zur drahtlosen Datenübertragung, der eine Steuereinrichtung (7) zum Einstellen verschiedener Betriebszustände aufweist, wobei
- ein erster Betriebszustand (I) vorgesehen ist, in dem im wesentlichen alle Komponenten des tragbaren Computers umfassend den Prozessor (2) in einem Zustand mit voller Funktionalität (A) sind und
- ein zweiter Betriebszustand (II) vorgesehen ist, in dem im wesentlichen alle Komponenten des tragbaren Computers umfassend den Prozessor (2) in einem Ruhezustand (S) mit eingeschränkter Funktionalität und erniedrigtem Stromverbrauch sind oder aus sind,
- ein dritter Betriebszustand (III) vorgesehen ist, in dem wenigstens die mindestens eine Einrichtung (3) zur drahtlosen Datenübertragung in dem Zustand voller Funktionalität (A) ist, während weitere Komponenten des tragbaren Computers umfassend den Prozessor (2), die nicht der drahtlosen Datenübertragung dienen, in dem Ruhezustand (S) mit eingeschränkter Funktionalität und erniedrigter Stromaufnahme sind oder aus sind, und
- Erkennungsmittel (15) vorgesehen sind, die während des dritten Betriebszustandes (III) überwachen, ob an der mindestens einen Einrichtung (3) zur drahtlosen Datenübertragung Daten eingehen,
**dadurch gekennzeichnet, dass**
- die Steuereinrichtung (7) dazu eingerichtet ist, beim Umschalten in den dritten Betriebszustand (III) sicherzustellen, dass die wenigstens eine Einrichtung (3) zur drahtlosen Datenübertragung in dem Zustand voller Funktionalität (A) verbleibt, wenn zum Zeitpunkt des Umschaltens eine aktive Funkverbindung besteht, mit Hilfe der Erkennungsmittel (15) zu überwachen, ob die Einrichtung (3) zur drahtlosen Kommunikation eingehende Daten signalisiert und den ersten Betriebszustand (I) einzustellen, falls bei der Einrichtung (3) zur drahtlosen Kommunikation Daten eingehen, um die eingehenden Daten zu verarbeiten, so dass der tragbare Computer im dritten Betriebszustand (III) über die Einrichtung (3) zur drahtlosen Datenübertragung erreichbar bleibt.

2. Tragbarer Computer nach Anspruch 1,
**dadurch gekennzeichnet, dass**
ein Zeitmesser (11) vorgesehen ist, der während des ersten Betriebszustandes (I) die Zeitspanne ermittelt, in der keine Eingabe auf dem tragbaren Computer erfolgt und dass die Steuereinrichtung (7) auf den dritten Betriebszustand (III) umschaltet, falls die Zeitspanne einen vorgegebenen Wert überschreitet.

3. Tragbarer Computer nach einem der Ansprüche 1 oder 2,
**dadurch gekennzeichnet, dass**
eine Tabelle (13) vorgesehen ist, in der alle auf dem tragbaren Computer ausführbaren Anwendungsprogramme (10) aufgeführt sind, die beim Einstellen des dritten Betriebszustands (III) durch die Steuervorrichtung (7) nicht unterbrochen werden dürfen.

4. Tragbarer Computer nach Anspruch 3,
**dadurch gekennzeichnet, dass**
die Steuereinrichtung (7) beim Einstellen des dritten Betriebszustands (III) alle zum Zeitpunkt des Wechsels aktuell ausgeführten Anwendungsprogramme (10) unterbricht, die nicht in der Tabelle (13) gelistet sind.

5. Tragbarer Computer nach einem der Ansprüche 1 bis 4,
**dadurch gekennzeichnet, dass**
die Steuereinrichtung (7) in dem dritten Betriebszustand (III) nur solche weitere Komponenten des tragbaren Computers in den Ruhezustand (S) mit eingeschränkter Funktionalität und erniedrigtem Stromverbrauch versetzt oder ausschaltet, die von keiner der auf den tragbaren Computer zum Zeitpunkt der Umschaltung in den dritten Betriebszustand (III) ausgeführten und nicht in der Tabelle (13) gelisteten Anwendungsprogramme (10) benötigt werden.

6. Tragbarer Computer nach einem der Ansprüche 1 bis 5,
**dadurch gekennzeichnet, dass**
die Steuereinrichtung (7) über Mittel (14) verfügt, ein eventuell vom Betriebssystem (6) des tragbaren Computers vorgesehenes Umschalten in den zweiten Betriebszustand (II) zu unterbinden.

7. Tragbarer Computer nach Anspruch 6,
**dadurch gekennzeichnet, dass**
eine Batterie (9) und ein Überwachungsmittel (12) für den Ladezustand der Batterie (9) des tragbaren Computers vorhanden sind, und dass von der Steuereinrichtung (7) ein eventuell vom Betriebssystem (6) vorgesehenes Umschalten in den zweiten Betriebszustand (II) dann nicht unterbunden wird, falls der Ladezustand der Batterie (9) einen vorgegebenen Wert unterschreitet.

8. Tragbarer Computer nach einem der Ansprüche 1 bis 7,
**dadurch gekennzeichnet, dass**
Bedienelemente (8) vorhanden sind, durch die manuell zwischen den verschiedenen Betriebszuständen (I, II oder III) umgeschaltet werden kann.

9. Tragbarer Computer nach einem der Ansprüche 1 bis 8,
**dadurch gekennzeichnet, dass**
die wenigstens eine Einrichtung (3) zur drahtlosen Datenübertragung dem WLAN (Wireless Local Area Network), dem BT(Blue Tooth), dem GPRS(Global Packaging Radio System), dem GSM (Global System for Mobile Communication), dem UMTS (Universal Mobil Telecommunication System) oder dem GPS (Global Positioning System) Standard entspricht.

10. Tragbarer Computer nach einem der Ansprüche 1 bis 9,
**dadurch gekennzeichnet, dass**
mindestens ein Steckplatz (5) für Einsteckkarten (4) zur Erweiterung der Funktionalität des tragbaren Computers vorgesehen ist.

11. Tragbarer Computer nach Anspruch 10,
**dadurch gekennzeichnet, dass**
die mindestens eine Einrichtung (3) zur drahtlosen Datenübertragung eine Einsteckkarte (4) sein kann.

12. Verfahren zum Einstellen verschiedener Betriebszustände für einen tragbaren Computer, der einen Prozessor (2) und wenigstens eine Einrichtung (3) zur drahtlosen Datenübertragung aufweist, wobei
- ein erster Betriebszustand (I) vorgesehen ist, in dem im wesentlichen alle Komponenten umfassend den Prozessor (2) des tragbaren Computers in einem Zustand mit voller Funktionalität (A) sind und
- ein zweiter Betriebszustand (II) vorgesehen ist, in dem im wesentlichen alle Komponenten umfassend den Prozessor (2) des tragbaren Computers in einem Ruhezustand (S) mit eingeschränkter Funktionalität und erniedrigtem Stromverbrauch sind oder aus sind, und
- ein dritter Betriebszustand (III) angewiesen werden kann, bei dem wenigstens die mindestens eine Einrichtung (3) zur drahtlosen Datenübertragung in dem Zustand voller Funktionalität (A) ist, während weitere Komponenten des tragbaren Computers umfassend den Prozessor (2), die nicht der drahtlosen Datenübertragung dienen, in dem Ruhezustand (S) mit eingeschränkter Funktionalität und erniedrigter Stromaufnahme sind oder aus sind,
**dadurch gekennzeichnet, dass**
- beim Umschalten in den dritten Betriebszustand (III) sichergestellt wird, dass die wenigstens eine Einrichtung (3) zur drahtlosen Datenübertragung in dem Zustand voller Funktionalität (A) verbleibt, wenn zum Zeitpunkt des Umschaltens eine aktive Funkverbindung besteht,
- in dem dritten Betriebszustand (III) überwacht wird, ob die Einrichtung (3) zur drahtlosen Kommunikation eingehende Daten signalisiert
- aus dem dritten Betriebszustand (III) in den ersten Betriebszustand (I) umgeschaltet wird, falls während des dritten Betriebszustandes bei der mindestens einen Einrichtung (3) zur drahtlosen Datenübertragung Daten eingehen, und
- die eingehenden Daten in dem ersten Betriebszustand (I) verarbeitet werden, so dass der tragbare Computer im dritten Betriebszustand (III) über die Einrichtung (3) zur drahtlosen Datenübertragung erreichbar bleibt.

13. Verfahren nach Anspruch 12,
**dadurch gekennzeichnet, dass**
- aus dem ersten Betriebszustand (I) in den dritten Betriebszustand (III) umgeschaltet wird, falls für länger als für eine vorgegebene Zeit keine Eingabe auf dem tragbaren Computer erfolgt.

14. Verfahren nach einem der Ansprüche 12 oder 13,
**dadurch gekennzeichnet, dass**
anhand vorgegebener Kriterien bei jedem Umschalten in den dritten Betriebszustand (III) neu festgelegt wird, welche der weiteren Komponenten im dritten Betriebszustand (III) im Zustand voller Funktionalität (A) verbleiben und welche Komponenten in den Ruhezustand (S) versetzt werden dürfen.

15. Verfahren nach einem der Ansprüche 12 bis 14,
**dadurch gekennzeichnet, dass**
eventuell vorhandene Anweisungen des Betriebssystems (6) zum Umschalten des Betriebszustands unterbunden werden.

## Claims

1. Portable computer having a processor (2) and at least one device (3) for wireless data transmission, which portable computer has a control device (7) for setting various operating states, wherein
- a first operating state (I) is provided, in which essentially all the components of the portable computer comprising the processor (2) are in a state with full functionality (A), and
- a second operating state (II) is provided, in which essentially all the components of the portable computer comprising the processor (2) are in an idle state (S) with restricted functionality and reduced power consumption or are off,
- a third operating state (III) is provided, in which at least the at least one device (3) for wireless data transmission is in the state of full functionality (A), while further components of the portable computer comprising the processor (2) that are not used for wireless data transmission are in the idle state (S) with restricted functionality and reduced power consumption or are off, and
- identification means (15) are provided, which, during the third operating state (III), monitor whether data arrive on the at least one device (3) for wireless data transmission,
**characterized in that**
- the control device (7) is set up so that, when it changes over to the third operating state (III), it ensures that the at least one device (3) for wireless data transmission remains in the state of full functionality (A) if there is an active radio link at the time of the changeover, it uses the identification means (15) to monitor whether the device (3) for wireless communication signals arriving data, and it sets the first operating state (I) if data arrive on the device (3) for wireless communication in order to process the arriving data, with the result that the portable computer remains able to be reached via the device (3) for wireless data transmission in the third operating state (III).

2. Portable computer according to Claim 1,
**characterized in that**
a chronometer (11) is provided, which, during the first operating state (I), ascertains the period of time in which no input is made on the portable computer, and **in that** the control device (7) changes over to the third operating state (III) if the period of time exceeds a prescribed value.

3. Portable computer according to either of Claims 1 and 2,
**characterized in that**
a table (13) is provided, which shows all the application programs (10) able to be executed on the portable computer that must not be interrupted when the third operating state (III) is set by the control apparatus (7).

4. Portable computer according to Claim 3,
**characterized in that**
the control device (7), when setting the third operating state (III), interrupts all the application programs (10) currently being executed at the time of the change that are not listed in the table (13).

5. Portable computer according to one of Claims 1 to 4,
**characterized in that**
the control device (7) in the third operating state (III) puts only those further components of the portable computer into the idle state (S) with restricted functionality and reduced power consumption, or switches them off, that are not required by any of the application programs (10) that are being executed on the portable computer at the time of the changeover to the third operating state (III) and that are not listed in the table (13).

6. Portable computer according to one of Claims 1 to 5,
**characterized in that**
the control device (7) has means (14) for preventing any changeover to the second operating state (II) for which provision might be made by the operating system (6) of the portable computer.

7. Portable computer according to Claim 6,
**characterized in that**
a battery (9) and a monitoring means (12) for the charge state of the battery (9) of the portable computer are present, and **in that** the control device (7) does not prevent any changeover to the second operating state (II) for which provision may be made by the operating system (6) if the charge state of the battery (9) is below a prescribed value.

8. Portable computer according to one of Claims 1 to 7,
**characterized in that**
operator control elements (8) are present, which allow manual changeover between the various operating states (I, II or III).

9. Portable computer according to one of Claims 1 to 8,
**characterized in that**
the at least one device (3) for wireless data transmission is based on the WLAN (Wireless Local Area Network), the BT (BlueTooth), the GPRS (Global Packet Radio System), the GSM (Global System for Mobile Communication), the UMTS (Universal Mobile Telecommunication System) or the GPS (Global Positioning System) standard.

10. Portable computer according to one of Claims 1 to 9,
**characterized in that**
at least one slot (5) for plug-in cards (4) for expanding the functionality of the portable computer is provided.

11. Portable computer according to Claim 10,
**characterized in that**
the at least one device (3) for wireless data transmission may be a plug-in card (4).

12. Method for setting various operating states for a portable computer that has a processor (2) and at least one device (3) for wireless data transmission, wherein
- a first operating state (I) is provided, in which essentially all the components comprising the processor (2) of the portable computer are in a state with full functionality (A), and
- a second operating state (II) is provided, in which essentially all the components comprising the processor (2) of the portable computer are in an idle state (S) with restricted functionality and reduced power consumption or are off, and
- a third operating state (III) can be ordered, in which at least the at least one device (3) for wireless data transmission is in the state of full functionality (A), while further components of the portable computer comprising the processor (2) that are not used for wireless data transmission are in the idle state (S) with restricted functionality and reduced power consumption or are off,
**characterized in that**
- changeover to the third operating state (III) involves ensuring that the at least one device (3) for wireless data transmission remains in the state of full functionality (A) if there is an active radio link at the time of the changeover,
- the third operating state (III) involves monitoring whether the device (3) for wireless communication signals arriving data,
- changeover from the third operating state (III) to the first operating state (I) occurs if data arrive on the at least one device (3) for wireless data transmission during the third operating state, and
- the arriving data are processed in the first operating state (I), with the result that the portable computer remains able to be reached via the device (3) for wireless data transmission in the third operating state (III).

13. Method according to Claim 12,
**characterized in that**
- changeover from the first operating state (I) to the third operating state (III) occurs if no input is made on the portable computer for longer than a prescribed time.

14. Method according to either of Claims 12 and 13,
**characterized in that**
prescribed criteria are used upon every changeover to the third operating state (III) to re-stipulate which of the further components remain in the state of full functionality (A) in the third operating state (III) and which components can be put into the idle state (S).

15. Method according to one of Claims 12 to 14,
**characterized in that**
any instructions that may be present from the operating system (6) for changing over the operating state are prevented.

## Revendications

1. Ordinateur portable doté d'un processeur (2) et d'au moins un dispositif (3) de transfert de données sans fil et présentant un dispositif de commande (7) qui permet d'établir différents états de fonctionnement, à savoir :
un premier état de fonctionnement (I) dans lequel essentiellement tous les composants de l'ordinateur portable, y compris le processeur (2), sont placés dans un état à pleine fonctionnalité (A),
un deuxième état de fonctionnement (II) dans lequel essentiellement tous les composants de l'ordinateur portable, y compris le processeur (2), sont placés dans un état de repos (S) à fonctionnalité limitée et consommation réduite de courant, et
un troisième état de fonctionnement (III) dans lequel au moins le ou les dispositifs (3) de transfert de données sans fil sont placés à l'état de pleine fonctionnalité (A) tandis que d'autres composants de l'ordinateur portable qui ne servent pas au transfert de données sans fil, y compris le processeur (2), sont placés dans l'état de repos (S) en fonctionnalité limitée et consommation réduite de courant,
des moyens de détection (15) surveillant pendant le troisième état de fonctionnement (III) si des données entrent sur le ou les dispositifs (3) de transfert de données sans fil,
**caractérisé en ce que**
le dispositif de commande (7) est conçu pour garantir que le ou les dispositifs (3) de transfert de données sans fil restent dans l'état de pleine fonctionnalité (A) lors du basculement dans le troisième état de fonctionnement (III) si une liaison radio est active à l'instant du basculement, pour surveiller à l'aide des moyens de détection (15) si le dispositif (3) de communication sans fil signale l'entrée de données, pour établir le premier état de fonctionnement (I) au cas où des données entrent sur le dispositif (3) de communication sans fil et pour traiter les données entrantes de telle sorte que dans le troisième état de fonctionnement (III) l'ordinateur portable reste accessible par l'intermédiaire du dispositif (3) de transfert de données sans fil.

2. Ordinateur portable selon la revendication 1, **caractérisé en ce qu'**il présente une horloge (11) qui détermine pendant le premier état de fonctionnement (I) la durée pendant laquelle aucune introduction n'a eu lieu sur l'ordinateur portable et **en ce que** le dispositif de commande (7) commute sur le troisième état de fonctionnement (III) au cas où la durée dépasse une valeur prédéterminée.

3. Ordinateur portable selon l'une des revendications 1 ou 2, **caractérisé en ce qu'**il présente un tableau (13) qui reprend tous les programmes d'application (10) qui peuvent être exécutés sur l'ordinateur portable et qui ne peuvent être interrompus lors de l'établissement du troisième état de fonctionnement (III) par le dispositif de commande (7).

4. Ordinateur portable selon la revendication 3, **caractérisé en ce que** lors de l'établissement du troisième état de fonctionnement (III), le dispositif de commande (7) interrompt tous les programmes d'application (10) effectivement exécutés à l'instant du basculement et non repris dans le tableau (13).

5. Ordinateur portable selon l'une des revendications 1 à 4, **caractérisé en ce que** dans le troisième état de fonctionnement (III), le dispositif de commande (7) ne place dans l'état de repos (S) à fonctionnalité limitée et consommation réduite en courant ou ne débranche aucun des autres composants de l'ordinateur portable qui sont nécessaires pour que les programmes d'application (10) puissent être exécutés dans le troisième état de fonctionnement (III) sur l'ordinateur portable à l'instant du basculement et qui ne sont pas repris dans le tableau (13).

6. Ordinateur portable selon l'une des revendications 1 à 5, **caractérisé en ce que** le dispositif de commande (7) dispose de moyens (14) pour empêcher le basculement dans le deuxième état de fonctionnement (II) éventuellement prévu par le système d'exploitation (6) de l'ordinateur portable.

7. Ordinateur portable selon la revendication 6, **caractérisé en ce qu'**une batterie (9) et un moyen de surveillance (12) de l'état de charge de la batterie (9) de l'ordinateur portable sont prévus et **en ce que** le basculement éventuellement prévu par le système d'exploitation (6) dans le deuxième état de fonctionnement (II) n'est pas empêché par le dispositif de commande (7) au cas où l'état de charge de la batterie (9) n'atteint pas une valeur prédéterminée.

8. Ordinateur portable selon l'une des revendications 1 à 7, **caractérisé en ce qu'**il présente des éléments de commande (8) qui permettent de commuter manuellement entre les différents états de fonctionnement (I, II ou III).

9. Ordinateur portable selon l'une des revendications 1 à 8, **caractérisé en ce que** le ou les dispositifs (3) de transfert sans fil de données correspondent à la norme WLAN ("Wireless Local Area Network"), à la norme BT ("Blue Tooth"), à la norme GPRS ("Global Packaging Radio System"), à la norme GSM ("Global System for Mobile Communication"), à la norme UMTS ("Universal Mobile Telecommunication System") ou à la norme GPS ("Global Positioning System").

10. Ordinateur portable selon l'une des revendications 1 à 9, **caractérisé en ce qu'**au moins un emplacement (5) d'enfichage de carte enfichable (4) permettant d'étendre la fonctionnalité de l'ordinateur portable est prévue.

11. Ordinateur portable selon la revendication 10, **caractérisé en ce que** le ou les dispositifs (3) de transfert de données sans fil peuvent être une carte enfichable (4).

12. Procédé permettant d'établir différents états de fonctionnement d'un ordinateur portable qui présente un processeur (2) et au moins un dispositif (3) de transfert de données sans fil, à savoir :
un premier état de fonctionnement (I) dans lequel essentiellement tous les composants de l'ordinateur portable, y compris le processeur (2), sont placés dans un état à pleine fonctionnalité (A),
un deuxième état de fonctionnement (II) dans lequel essentiellement tous les composants de l'ordinateur portable, y compris le processeur (2), sont placés dans un état de repos (S) à fonctionnalité limitée et consommation réduite de courant, et
un troisième état de fonctionnement (III) dans lequel au moins le ou les dispositifs (3) de transfert de données sans fil sont placés à l'état de pleine fonctionnalité (A) tandis que d'autres composants de l'ordinateur portable qui ne servent pas au transfert de données sans fil, y compris le processeur (2), sont placés dans l'état de repos (S) en fonctionnalité limitée et consommation réduite de courant,
**caractérisé en ce que**
lors du basculement dans le troisième état de fonctionnement (III), il est garanti que le ou les dispositifs (3) de transfert de données sans fil restent dans l'état de pleine fonctionnalité (A) si une liaison radio est active à l'instant du basculement,
dans le troisième état de fonctionnement (III), on surveille si le dispositif (3) de communication sans fil signale l'entrée de données,
au cas où des données entrent sur le dispositif (3) de communication sans fil, on commute du troisième état de fonctionnement (III) au premier état de fonctionnement (I) et
les données entrantes sont traitées dans le premier état de fonctionnement (I) de telle sorte que dans le troisième état de fonctionnement (III), l'ordinateur portable reste accessible par l'intermédiaire du dispositif (3) de transfert de données sans fil.

13. Procédé selon la revendication 12, **caractérisé en ce qu'**une commutation depuis le premier état de fonctionnement (I) jusque dans le troisième état de fonctionnement (III) au cas où aucune introduction d'a eu lieu sur l'ordinateur portable pendant plus longtemps qu'une durée prédéterminée.

14. Procédé selon l'une des revendications 12 ou 13, **caractérisé en ce que** lors de chaque commutation dans le troisième état de fonctionnement (III), il est vérifié de nouveau à l'aide de critères prédéterminés, quels autres composants restent dans le troisième état de fonctionnement (III) à l'état de pleine fonctionnalité (A) et quels composants peuvent être placés dans l'état de repos (S).

15. Procédé selon l'une des revendications 12 à 14, **caractérisé en ce que** des indications éventuellement prévues dans le système d'exploitation (6) pour la commutation des états de fonctionnement sont bloquées.
